# EUROPÄISCHE PATENTSCHRIFT

(11) **EP 0 742 811 B1**
(45) Veröffentlichungstag und Bekanntmachung des Hinweises auf die Patenterteilung: **31.03.1999**
(21) Anmeldenummer: 95908226.4
(22) Anmeldetag: 31.01.1995
(51) Int. Cl.: C09B 55/00, C09B 23/04

(54) **VERFAHREN ZUR HERSTELLUNG VON PYRIDINFARBSTOFFEN**
METHOD FOR PREPARING PYRIDINE DYES
PROCEDE DE PREPARATION DE COLORANTS A LA PYRIDINE

(30) Priorität: 02.02.1994 DE 4403083
(43) Veröffentlichungstag der Anmeldung: 20.11.1996
(73) Patentinhaber: BASF AKTIENGESELLSCHAFT, 67056 Ludwigshafen (DE)
(72) Erfinder: SCHEFCZIK, Ernst, D-67069 Ludwigshafen (DE); GRÜTTNER-MERTEN, Sabine, D-64625 Bensheim (DE); SALING, Peter, D-67434 Neustadt (DE); SENS, Rüdiger, D-68165 Mannheim (DE); REICHELT, Helmut, D-67435 Neustadt (DE)
(86) Internationale Anmeldenummer: EP9500327
(87) Internationale Veröffentlichungsnummer: WO9521219

(56) Entgegenhaltungen:
- EP-A- 0 291 853
- EP-A- 0 413 226
- EP-A- 0 416 434
- WO-A-92/19684
- GB-A- 1 292 454
- GB-A- 2 001 094
- GB-A- 2 014 598

## Beschreibung

Die vorliegende Erfindung betrifft ein neues Verfahren zur Herstellung von Methin- oder Azamethinfarbstoffen auf Basis von Pyridinfarbstoffen, wobei man ein Oxim- oder Formylpyridin oder dessen tautomere Form mit 5-gliedrigen aromatischen Heterocyclen kondensiert.

Aus der US-A-5 079 365 sind Triazolopyridinfarbstoffe bekannt, die 5-gliedrige aromatische heterocyclische Reste aufweisen, die über ein Stickstoffatom an das Triazolopyridin geknüpft sind. ihre Herstellung erfolgt durch Kondensation des nitrosierten Heterocyclus mit dem Triazolopyridin.

Die GB-A-2 014 598 beschreibt die Kondensation eines Nitrosopyridons mit einem Pyrazolon.

Aufgabe der vorliegenden Erfindung war es nun, ein neues Verfahren zur Herstellung von Pyridinfarbstoffen bereitzustellen, das die Zielprodukte auf einfache Weise und in guter Ausbeute und Reinheit liefert.

Es wurde gefunden, daß die Herstellung von Pyridinfarbstoffen der Formel I 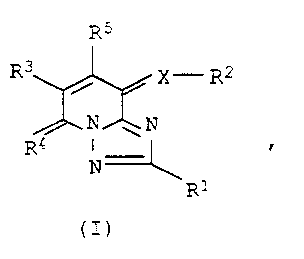 worin
- X: Stickstoff oder CH,
- R¹: C₁-C₂₀-Alkyl, das gegebenenfalls substituiert ist und durch ein oder mehrere Sauerstoffatome in Etherfunktion unterbrochen sein kann, gegebenefalls substituiertes Phenyl oder Hydroxy,
- R²: einen 5-gliedrigen aromatischen heterocyclischen Rest,
- R³: Wasserstoff, Cyano, Carbamoyl, Carboxyl oder C₁-C₄-Alkoxycarbonyl,
- R⁴: Sauerstoff oder einen Rest der Formel C(CN)₂, C(CN)COOL¹ oder C(COOL¹)₂, wobei L¹ jeweils für C₁-C₈-Alkyl, das gegebenenfalls durch 1 oder 2 Sauerstoffatome in Etherfunktion unterbrochen ist, steht, und
- R⁵: Wasserstoff oder C₁-C₄-Alkyl bedeuten,
vorteilhaft gelingt, wenn man eine Pyridinverbindung der Formel II 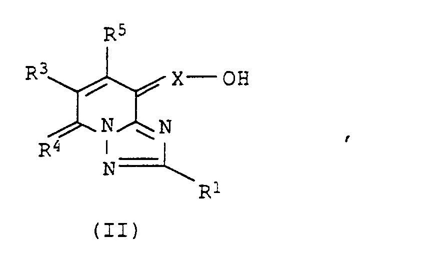 worin X, R¹, R³, R⁴ und R⁵ jeweils die obengenannte Bedeutung besitzen, mit einem 5-gliedrigen aromatischen Heterocyclus der Formel III

R²―H (III),

in der R² die obengenannte Bedeutung besitzt, in saurem, Reaktionsmedium bei einer Temperatur von -10 bis -100°C kondensiert.

Die Farbstoffe der Formel I können in mehreren tautomeren Formen auftreten, die alle von den Patentansprüchen umfaßt werden. Beispielsweise können die Verbindungen der Formel I (mit R⁴ = Sauerstoff und R⁵ = Methyl) u.a. in folgenden tautomeren Formen auftreten:

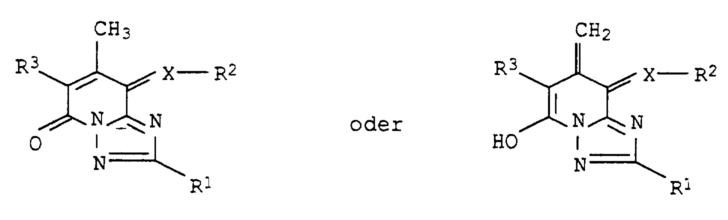

Der gleiche Sachyerhalt trifft auch für die Pyridinverbindungen der Formel II zu. Beispielsweise können die Verbindungen der Formel II (mit R⁴ = Sauerstoff) u.a. in folgenden tautomeren Formen auftreten:

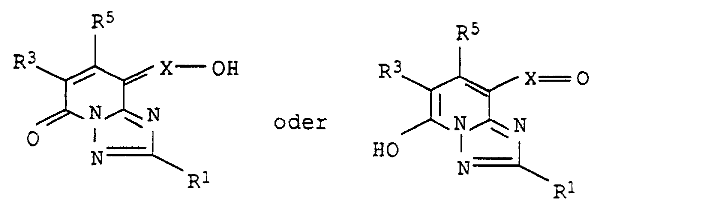

Wenn in den obengenannten Formeln substituierte Alkylreste auftreten, so können als Substituenten, sofern nicht anders vermerkt, z.B. Phenyl, C₁-C₄-Alkylphenyl, C₁-C₄-Alkoxyphenyl, Halogenphenyl, C₁-C₈-Alkanoyloxy, C₁-C₈-Alkylaminocarbonyloxy, C₁-C₂₀-Alkoxycarbonyl, C₁-C₂₀-Alkoxycarbonyloxy, wobei die Alkylkette der beiden letztgenannten Reste gegebenenfalls durch 1 bis 4 Sauerstoffatome in Etherfunktion unterbrochen und/oder durch Phenyl oder Phenoxy substituiert ist, Halogen, Hydroxy oder Cyano in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind, sofern nicht anders vermerkt, solche Alkylreste bevorzugt, die durch 1 bis 4 Sauerstoffatome, insbesondere 1 bis 2 Sauerstoffatome, in Etherfunktion unterbrochen sind.

Wenn in den obengenannten Formeln substituierte Phenylreste auftreten, so können als Substituenten, sofern nicht anders vermerkt, z.B. C₁-C₈-Alkyl, C₁-C₈-Alkoxy, Halogen, dabei insbesondere Chlor oder Brom, oder Carboxyl in Betracht kommen. Die Phenylreste weisen dabei in der Regel 1 bis 3 Substituenten auf.

Reste R² können sich z.B. von Komponenten aus Pyrrol-, Thiazol-, Thiophen- oder Indolreihe ableiten.

Wichtige Reste R² sind z.B. solche der Formeln IIIa bis IIId 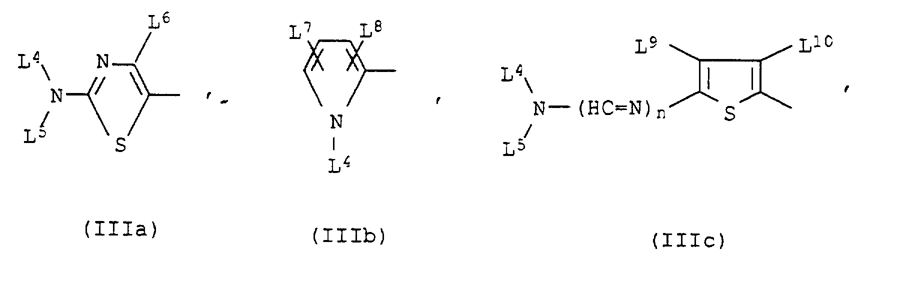 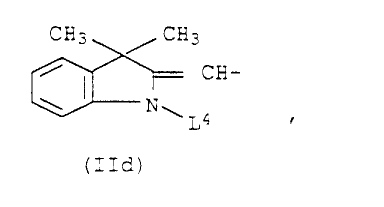 worin
- n: für 0 oder 1,
- L⁴ und L⁵: gleich oder verschieden sind und unabhängig voneinander jeweils für Wasserstoff oder mit Ausnahme von Hydroxy auch für den obengenannzen Rest R¹ oder zusammen mit dem sie verbindenden Stickstoffatom für einen 5- oder 6-gliedrigen gesättigten heterocyclischen Rest, der gegebenenfalls weitere Heteroatome enthält,
- L⁶: für Wasserstoff, Halogen, C₁-C₈-Alkyl, gegebenenfalls substituiertes Phenyl, gegebenenfalls durch substituiertes Benzyl, Cyclohexyl, Thienyl, Hydroxy oder C₁-C₈-Monoalkylamino,
- L⁷ und L⁸: unabhängig voneinander jeweils für Wasserstoff, Hydroxy, gegebenenfalls durch Phenyl oder C₁-C₄-Alkylphenyl substituiertes C₁-C₈-Alkyl, gegebenenfalls durch Phenyl oder C₁-C₄-Alkylphenyl substituiertes C₁-C₈-Alkoxy, C₁-C₈-Alkanoylamino, C₁-C₈-Alkylsulfonylamino oder C₁-C₈-Mono- oder Dialkylaminosulfonylamino,
- L⁹: für Cyano, Carbamoyl, C₁-C₈-Mono- oder Dialkylcarbamoyl, C₁-C₈-Alkoxycarbonyl oder gegebenenfalls substituiertes Phenyl und
- L¹⁰: für Halogen, Wasserstoff, C₁-C₄-Alkyl, C₁-C₄-Alkoxy, C₁-C₄-Alkylthio, gegebenenfalls substituiertes Phenyl oder Thienyl stehen.

Alle in den obengenannten Formeln auftretenden Alkylreste können sowohl geradkettig als auch verzweigt sein.

Geeignete Reste R¹, R⁵, L¹, L², L³, L⁴, L⁵, L⁶, L⁷, L⁸ und L¹⁰ sind z.B. Methyl, Ethyl, Propyl, Isopropyl, Butyl, Isobutyl, sec-Butyl oder tert-Butyl.

Reste R¹, L¹, L², L³, L⁴, L⁵, L⁶, L⁷ und L⁸ sind weiterhin z.B. Pentyl, Isopentyl, Neopentyl, tert-Pentyl, Hexyl, 2-Methylpentyl, Heptyl, 1-Ethylpentyl, Octyl, 2-Ethtylhexyl oder Isooctyl.

Reste R¹, L² und L³ sind weiterhin z.B. Nonyl, Isononyl, Decyl, Isodecyl, Undecyl oder Dodecyl.

Reste R¹ sind weiterhin z.B. Tridecyl, Isotridecyl, Tetradecyl, Pentadecyl, Hexadecyl, heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Carboxylethyl, 2-Methoxycarbonylethyl, Benzyl, 1- oder 2-Phenylethyl, 3-Benzyloxypropyl, Phenoxymethyl, 6-Phenoxy-4-oxahexyl oder 8-Phenoxy-4-oxaoctyl.

Reste R¹ und L¹ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste R¹ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4,11-Dioxapentadecyl.

Reste R³, L², L³ und L⁹ sind z.B. Methoxycarbonyl, Ethoxycarbonyl, Propoxycarboryl, Isopropoxycarbonyl, Butoxycarbonyl, Isobutoxycarbonyl oder sec-Butoxycarbonyl.

Reste L⁹ sind weiterhin z.B. Mono- oder Dimethylcarbamoyl, Mono- oder Diethylcarbonyl, Mono- oder Dipropylcarbamoyl, Mono- oder Diisopropylcarbonyl, Mono- oder Dibutylcarbamoyl oder N-Methyl-N-butylcarbamoyl.

Reste L⁷, L⁸ und L¹⁰ sind weiterhin z.B. Methoxy, Ethoxy, Propoxy, Isopropoxy, Butoxy, Isobutoxy oder sec-Butoxy.

Reste L¹⁰ weiterhin z.B. Methylthio, Ethylthio, Propylthio, Isopropylthio, Butylthio, Isobutylthio oder sec-Butylthio.

R¹, L², L³, L⁶ und L¹⁰ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl oder 2-, 3- oder 4-Carboxylphenyl.

Reste R¹, L² und L³ sind weiterhin z.B. 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Reste L² und L³ sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl, Thien-3-ylcarbonyl, Cyclopentyl, Cyclohexyl oder Cycloheptyl.

Reste L⁶ und L¹⁰ sind weiterhin z.B. Fluor, Chlor oder Brom.

Reste L⁷ und L⁸ sind weiterhin z.B. Formylamino, Acetylamino, Propionylamino, Butyrylamino, Methylsulfonylamino, Ethylsulfonylamino, Propylsulfonylamino, Isopropylsulfonylamino, Butylsulfonylamino, Mono- oder Dimethylaminosulfonylamino oder Mono- oder Diethylaminosulfonylamino.

Wenn L² und L³ oder L⁴ und L⁵ zusammen mit dem sie verbindenden Stickstoffatom einen 5- oder 6-gliedrigen gesättigten heterocyclischen Rest, der gegebenenfalls weitere Heteroatome enthält, bedeuten, so können dafür z.B. Pyrrolidinyl, Piperidinyl, Morpholinyl, Piperazinyl oder N-(C₁-C₄-Alkyl)piperazinyl in Betracht kommen.

Bevorzugt ist die Herstellung vor Pyridinfarbstoffen der Formel I, worin R⁵ Methyl bedeutet.

Weiterhin bevorzugt ist die Herstellung von Pyridinfarbstoffen der Formel I, worin R³ Cyano bedeutet.

Weiterhin bevorzugt ist die Herstellung von Pyridinfarbstoffen der Formel I, worin R⁴ Sauerstoff bedeutet.

Weiterhin bevorzugt ist die Herstellung von Pyridinfarbstoffen der Formel I, in der X Stickstoff bedeutet.

Weiterhin bevorzugt ist die Herstellung von Pyridinfarbstoffen der Formel I, worin R² einen Rest aus der Pyrrol-, Thiazol- oder Thiophenreihe bedeutet.

Weiterhin bevorzugt ist die Herstellung von Pyridinfarbstoffen der Formel I, worin R¹ oder R⁶ C₁-C₁₂-Alkyl, das gegebenenfalls durch C₁-C₆-Alkanoyloxy, C₁-C₈-Alkoxycarbonyl, deren Alkylkette jeweils durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Insbesondere bevorzugt ist die Herstellung von Pyridinfarbstoffen der Formel I, worin R¹ oder R⁶ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin insbesondere bevorzugt ist die Herstellung von Pyridinfarbszoffen der Formel I, worin R² einen Rest der obengenannten Formel IIIa oder IIIc, dabei insbesondere IIIa, bedeuten, wobei
- L⁴ und L⁵: unabhängig voneinander für Alkyl, Alkoxyalkyl, Alkanoyloxyalkyl oder Alkoxycarbonylalkyl, wobei diese Reste jeweils bis zu 12 Kohlenszoffazome aufweisen, Wasserstoff, gegebenenfalls durch Methyl substituiertes Benzyl oder gegebenenfalls durch Methyl substituiertes Phenyl,
- L⁶: für Wasserstoff, C₁-C₄-Alkyl, gegebenenfalls durch C₁-C₄-Alkyl oder C₁-C₄-Alkoxy substituiertes Phenyl, Benzyl oder Thienyl,
- L⁹: für Cyano,
- L¹⁰: für Halogen, Wasserstoff, C₁-C₄-Alkyl, C₁-C₄-Alkoxy, C₁-C₄-Alkylthio, gegebenenfalls durch C₁-C₄-Alkyl substituiertes Phenyl oder Thienyl und
- n: für 0 stehen.

Die Pyridinverbindungen der Formel II und die Heterocyclen der Formel III können im erfindungsgemäßen Verfahren im Molverhältnis 1 : 2 bis 2 : 1, vorzugsweise 1,4 : 1 bis 1,5 : 1, zur Anwendung kommen.

Das neue Verfahren wird im allgemeinen bei atmosphärischem Druck und bei einer Temperatur von -10 bis +100°C, vorzugsweise 20 bis 80°C und insbesondere 30 bis 70°C, wobei der Bereich von 55 bis 65°C besonders zu nennen ist, in saurem Reaktionsmedium vorgenommen.

Geeignete saure Reaktionsmedien sind z.B. wäßrige Säuren, wäßrigalkoholische Säuren, alkoholische Säuren oder Acetanhydrid.

Wäßrige Säuren sind z.B. verdünnte Säuren, die einen pH-Wert von 0 bis 5, vorzugsweise 1 bis 3, insbesondere ca. 2, aufweisen. Beispielsweise sind verdünnte Salzsäure, verdünnte Schwefelsäure oder deren Mischungen zusammen mit Essigsäure zu nennen.

Bei der Anwendung von wäßrig-alkoholischen oder alkoholischen Säuren sind geeignete Alkohole, Insbesondere C₁-C₄-Alkanole, wie Methanol, Ethanol, Propanol, Isopropanol, Butanol, Isobutanol, sec-Butanol oder tert-Butanol.

Als wäßrig-alkoholische Säuren kommen insbesondere Mischungen (1:20 bis 20:1 v/v) der obengenannter wäßrigen Säuren mit dem genannten Alkoholen in Betracht.

Unter alkoholischen Säuren sind insbesondere halbgesättigte bis gesättigte Lösungen von Chlorwasserstoff in den genannten Alkoholen oder auch Mischungen vor Polyphosphorsäure und Alkoholen zu verstehen.

Bezogen auf das Gewicht der Reaktionspartner (Pyridinverbindung II und Heterocyclus III) verwendet man in der Regel 10 bis 40 Gew.-%, vorzugsweise 20 bis 25 Gew.-%, an saurem Reaktionsmedium.

Das neue Verfahren, das sowohl in kontinuierlicher als auch in diskontinuierlicher Arbeitsweise durchgeführt werden kann, wird zweckmäßig so vorgenommen, daß man die die Pyridinverbindung der Formel II in saurem Reaktionsmedium vorlegt und bei der erfindungsgemäßen Temperatur den Heterocyclus III zugibt. Nach einer Nachrührphase, die in der Regel 0,5 bis 2 Stunden in Anspruch nimmt und bei der erfindungsgemäßen Temperatur stattfindet, ist die Umsetzung beendet, und man kann die Zielprodukte auf an sich bekannte Weise isolieren.

Dies kann beispielsweise durch direkte Phasentrennung oder durch Aufnahme des Reaktionsprodukts in einem geeigneten organischen Lösungsmittel, z.B. Toluol oder Xylol geschehen, wonach an im zweitgenannten Fall die wäfrig Phase abtrennt und den Pyridinfarbstoff der Formel Ia oder Ib aus der organischen Phase, z.B. durch Zugabe von Methanol, fällt.

Es ist auch möglich, das Reaktionsgemisch zur Reinigung über Kieselgel oder Aluminiumoxid zu geben.

Eine besonders bevorzugte Herstellvariante besteht darin, die Pyridinfarbstoffe der Formel I, worin X Stickstoff bedeutet, im Eintopfverfahren herzustellen. Dazu wird zunächst ein Pyridin der Formel IV 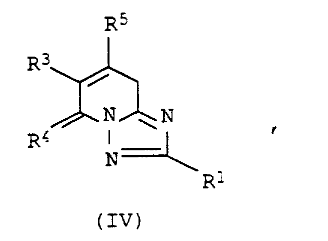 worin R¹, R³, R⁴ und R⁵ jeweils die obengenannte Bedeutung besitzen, durch Behandlung mit eine Nitrosierungsreagens, z.B. 5 bis 40 gew-%ige wäßrige Natriumnitritlösung, festes Natriumnitrit oder Neopentylglykoldinitrit, bei einer Temperatur von -10 bis +35°C, vorzugsweise 0 bis 20°C, in wäßrig-saurem Reaktionsmedium, z.B. in konzentrierter Salzsäure, gegebenenfalls in Gegenwart von Essigsäure, oder in alkoholisch saurem Reaktionsmedium, z.B. in einer Mischung aus Polyphosphorsäure und einem Alkohol, in die Pyridinverbindung der Formel II (X=N) übergeführt. Zum resultierenden Reaktionsgemisch wird dann, gegebenenfalls nach Verdünnung mit saurem Reaktionsmedium, der Heterocyclus III gegeben und, wie oben beschrieben, weiten verfahren.

Die Pyridinverbindungen der Formel II sind an sich bekannt und beispielsweise in der US-A-5 101 028 beschrieben oder können noch den dort genannten oder auch in den folgenden Beispielen genannten Methoden erhalten werten.

Das neue Verfahren liefert die Pyridinfarbstoffe der Formel I auf einfache Weise und in guter Ausbeute und Reinheit. Ein besonderer Vorteil des erfindungsgemäßen Verfahrens ist darin zu sehen, daß bei der Herstellung der Azamethinfarbstoffe die Anwendung von nitrosierten Verbindungen, die sich von Heterocyclen der Formel III ableiten, vermieden wird, da diese häufig eine ungenügende Stabilität aufweisen und geringe Produktionsausbeuten liefern und außerdem schlecht handhabbar sind. In ganz besonderem Maße trifft dies für 4-Alkylthiazole zu.

Wie eingangs schon erwähnt, handelt es sich bei den Pyridinfarbstoffen der Formel I um wertvolle Farbstoffe für den thermischen Farbstofftransfer.

Die folgenden Beispiele sollen die Erfindung näher erläutern.

### Beispiel 1

Zu einer Lösung von 272 g (1 mol) des Triazolopyridons der Formel 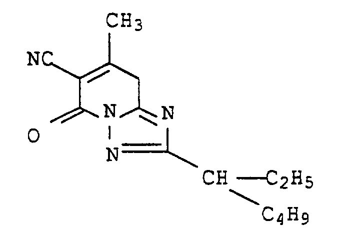 in 1400 ml Eisessig und 1400 ml konz. Salzsäure gab man nach 30-minütigem Rühren 600 ml 23 gew-%ige wäßrige Natriumnitritlösung bei 0 bis 5°C innerhalb von 1 h hinzu und rührte 2 h bei 0 bis 10°C nach. Anschließend gab man 1 l Wasser hinzu. Bei einer Temperatur von 10 bis 20°C wurden dann 230 g (0,8 mol) 2-Dibutylamino-4-phenylthiazol zugegeben und 30 min bei 15 bis 20°C gerührt. Im Anschluß wurden 10 g Amidosulfonsäure eingetragen und die Suspension 20 min bei 15 bis 20°C nachgerührt. Mit insgesamt 800 ml konz. Natronlauge wurde dann ein pH-Wert von 2 eingestellt. Die Suspension löste sich dabei auf uns es bildete sich eine grünlich-blaue Lösung. Man rührte 30 min bei 30°C, erwärmte auf 60°C und rührte bei dieser Temperatur 2 h nach. Der Kolbeninhalt wurde anschließend auf 0 bis 5°C abgekühlt. Dabei bildete sich ein schmierig klebriges Produkt, das in 400 ml Toluol aufgenommen wurde. Man trennte die Wasserphase ab, destillierte Toluol ab und gab 1000 ml Methanol in der Wärme hinzu. Anschließend kühlte man auf 0 bis 10°C ab, saugte den ausgefallenen Farbstoff ab und wusch mit wenig Methanol und Wasser nach. Man trocknete bei 60°C unter vermindertem Druck und erhielt 233 g (51 %) des Farbstoffs der Formel 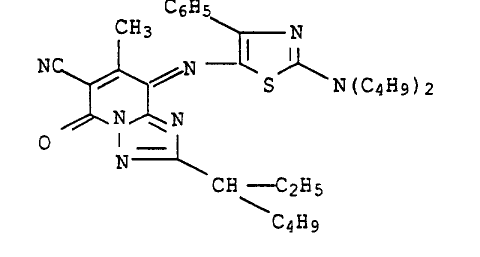 (Reinheit: > 98 %; Fp. 146 bis 148°C)

### Beispiel 2

Beispiel 2 wurde analog Beispiel 1 durchgeführt, jedoch wurde keine Amidosulfonsäure zugegeben. Man erhielt 260 g (57 %) Farbstoff.

### Beispiel 3

Beispiel 3 wurde analog Beispiel 1 durchgeführt. Nachdem man 2 h bei 60°C nachgerührt hatte, wurde jedoch kein Toluol zugegeben, sondern es erfolgte eine direkte Trennung der Phasen bei 50°C. Demnach wurde die organische Phase mit 200 ml Methanol versetzt, wobei der Farbstoff ausfiel und abgetrennt wurde.
Ausbeute: 233 g (51 %)

### Beispiel 4

a) Man verfuhr analog Beispiel 1, isolierte jedoch nach erfolgter Behandlung mit Natriumnitrit die Verbindung der Formel 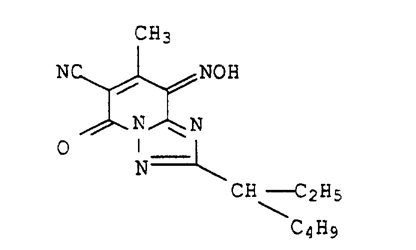 durch Absaugen, Waschen und Trocknen. Man erhielt 241 g (80 %) dieser Verbindung.
b) Zur Kondensation wurden 301 g (1 mol) der unter a) beschriebenen Verbindung in einer Mischung aus 600 ml Isopropanol und 100 g Polyphosphorsäure gelöst und mit 288 g (1 mol) 2-Dibutylamino-4-phenylthiazol versetzt. Es wurde 2 h bei 60°C gerührt und dann analog Beispiel 1 aufgearbeitet. Man erhielt 371 g (65 %) Farbstoff.

### Beispiel 5

Zu einer Lösung von 272 g (1 mol) des in Beispiel 1 als Ausgangspunkt verwendeten Triazolopyridons in 250 ml Chloroform wurden 120 g N,N-Dimethylformamid und 252 g (1 mol) Phosphoroxidtrichlorid hinzugegeben. an erhitzte anschließend 6 h unter Rückfluß, gab vorsichtig 250 ml Wasser hinzu und rührte 30 min bei Raumtemperatur. Nach dem Abtrennen des Wassers wurden die organische Phase mit 180 g Acetanhydrid versetzt. Anschließend wurden 345 g (1,2 mol) 2-Dibutylamino-4-phenylthiazol hinzugetropft, und danach wurde am Wasserabscheider 8 h erhitzt. Das Chloroform wurde abdestilliert, der Rückstand abgesaugt und mit Wasser und wenig Methanol gewaschen. Man erhielt 186 g (32,5 %) des Farbstoffs der Formel 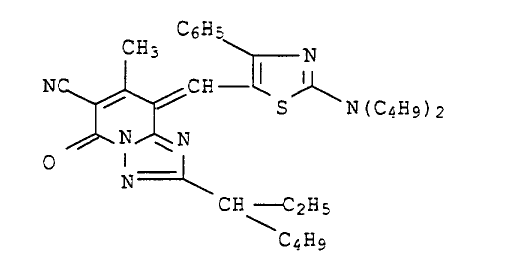 (Fp. : 189 bis 192°C)

### Beispiel 6

6 g der Verbindung der Formel 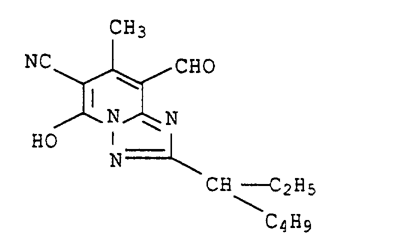 wurden mit 5,1 g 2-Diethylamino-4-phenylthiazol (90,8 gew-%ig) in 30 ml Acetanhydrid 3 h bei 35°C und 2 h bei 60°C gerührt. Es wurde abgesaugt, mit Methanol und Wasser gewaschen und getrocknet. Man erhielt 5,75 g des Farbstoffs der Formel 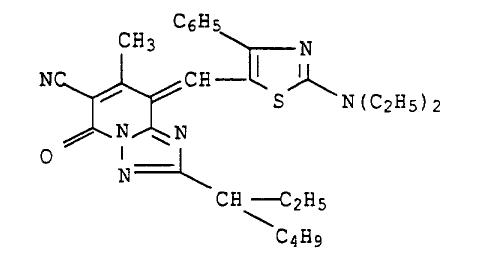 (λₘₐₓ = 561 mm, in DMF; Fp.: 205 bis 206°C)

In analoger Weise wurden die in der folgenden Tabelle aufgeführten Farbstoffe erhalten.

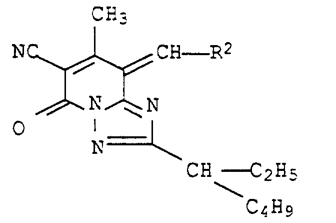

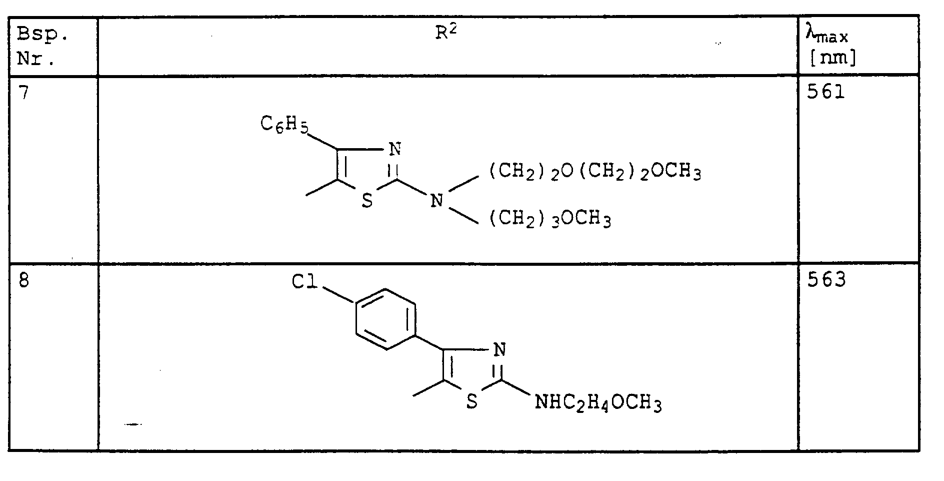

### Beispiel 9

7,5 g (0,025 mol) der in Beispiel 4a) beschriebenen Verbindung und 7,5 g (0,025 mol) 2-(Di-sec-butylamino)-4-tert-butylthiazol wurden in einem Gemisch aus 12 ml Eisessig und 12 ml Propionsäure 15 min unter Rückfluß erhitzt. Danach wurde auf Raumtemperatur abgekühlt und über Kieselgel mit Toluol/Essigester (9:1 v/v) als Eluens gereinigt. Man erhielt 2,63 g (19 %) des Farbstoffs der Formel

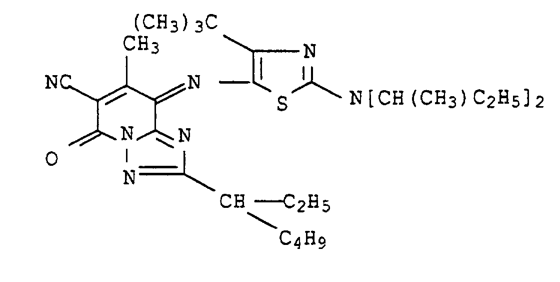

## Patentansprüche

1. Verfahren zur Herstellung von Pyridinfarbstoffen der Formel I 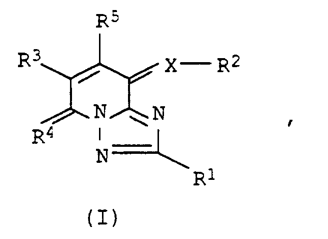 worin
X Stickstoff oder CH,
R¹ C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
R² einen 5-gliedrigen aromatischen heterocyclischen Rest,
R³ Wasserstoff, Cyano, Carbamoyl, Carboxyl oder C₁-C₄-Alkoxycarbonyl,
R⁴ Sauerstoff odez einen Rest der Formel C(CN)₂, C(CN)COOL¹ oder C(COOL¹)₂, wobie L¹ jeweils für C₁-C₈-Alkyl, das gegebenenfalls durch 1 oder 2 Sauerstoffatome in Etherfunktion unterbrochen ist, steht, und
R⁵ Wasserstoff oder C₁-C₄-Alkyl bedeuten,
dadurch gekennzeichnet, daß man eine Pyridinverbindung der Formel II 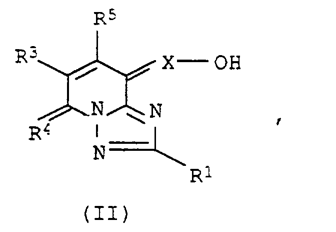 worin X, R¹, R³, R⁴ und R⁵ jeweils die obengenannte Bedeutung besitzen, mit einem 5-gliedrigen aromatischen Heterocyclus der Formel III
R²―H (III),
in der R² die obengenannte Bedeutung besitzt, in saurem Reaktionsmedium bei einer Temperatur von -10 bis +100°C kondensiert.

2. Verfahren nach Anspruch 1, dadurch gekennzeichnet, daß R⁵ Methyl bedeutet.

3. Verfahren nach Anspruch 1, daduch gekennzeichnet, daß R³ Cyano bedeutet.

4. Verfahren nach Anspruch 1, dadurch gekennzeichnet, daß R⁴ Sauerstoff bedeutet.

5. Verfahren nach Anspruch 1, dadurch gekennzeichnet, daß X in Formel I Stickstoff bedeutet.

6. Verfahren nach Anspruch 1, dadurch gekennzeichnet, daß R² einen Rest aus der Pyrrol-, Thiazol-, Thiophen- oder Indolreihe bedeutet.

7. Verfahren nach Anspruch 1, dadurch gekennzeichnet, daß man die Kondensation bei einer Temperatur von 20 bis 80°C vornimmt.

## Claims

1. A process for preparing pyridine dyes of the formula I 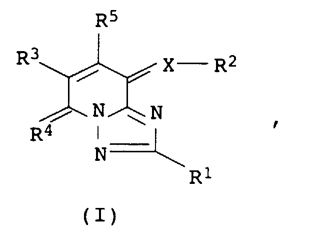 where
X is nitrogen or CH,
R¹ is C₁-C₂₀-alkyl, which may be substituted and may be interrupted by one or more oxygen atoms in ether function, substituted or unsubstituted phenyl, or hydroxyl,
R² is a 5-membered aromatic heterocyclic radical,
R³ is hydrogen, cyano, carbamoyl, carboxyl or C₁-C₄-alkoxycarbonyl,
R⁴ is oxygen or a radical of the formula C(CN)₂, C(CN)COOL¹ or C(COOL¹)₂, where L¹ is in either case C₁-C₈-alkyl, which may be interrupted by 1 or 2 oxygen atoms in ether function, and
R⁵ is hydrogen or C₁-C₄-alkyl,
which comprises condensing a pyridine compound of the formula II 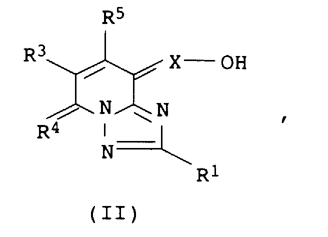 where X, R¹, R³, R⁴ and R⁵ are each as defined above, with a 5-membered aromatic heterocycle of the formula III
R²-H (III),
where R² is as defined above, in an acid reaction medium at from -10 to +100°C.

2. A process as claimed in claim 1, wherein R⁵ is methyl.

3. A process as claimed in claim 1, wherein R³ is cyano.

4. A process as claimed in claim 1, wherein R⁴ is oxygen.

5. A process as claimed in claim 1, wherein X is nitrogen in the formula I.

6. A process as claimed in claim 1, wherein R² is a radical of the pyrrole, thiazole, thiophene or indole series.

7. A process as claimed in claim 1, wherein the condensation is carried out at from 20 to 80°C.

## Revendications

1. Procédé de préparation de colorants pyridine de formule I 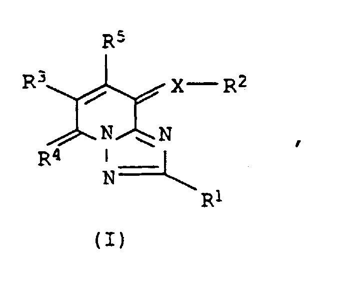 dans laquelle
X représente un atome d'azote ou CH,
R¹ représente un groupement alkyle en C₁-C₂₀ éventuellement substitué et pouvant être interrompu par un ou plusieurs atomes d'oxygène en fonction éther, des groupements phényle ou hydroxy éventuellement substitués,
R² représente un reste hétérocyclique aromatique à 5 maillons
_{R}3 représente un atome d'hydrogène, un groupement cyano, carbamoyle, carboxyle ou (alcoxy en C₁-C₄)carbonyle,
R⁴ représente un atome d'oxygène ou un reste de formule C(CN)₂, C(CN)COOL¹ ou C(COOL¹)₂, où L¹ est mis à chaque fois pour un groupement alkyle en C₁-C₈ pouvant être interrompu par 1 ou 2 atomes d'oxygène en fonction éther, et
R⁵ représente un atome d'hydrogène ou un groupement alkyle en C₁-C₄,
caractérisé en ce que l'on condense un composé de la pyridine de formule II 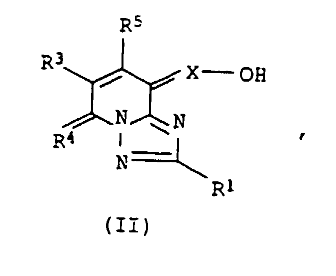 dans laquelle X, R¹, R³, R⁴ et R⁵ prennent chacun la signification susmentionnée, avec un hétérocycle aromatique à 5 maillons de formule III
R²-H (III),
dans laquelle R² prend la signification susmentionnée, dans un milieu réactionnel acide à une température de -10 à +100°C.

2. Procédé selon la revendication 1, caractérisé en ce que R⁵ représente un groupement méthyle.

3. Procédé selon la revendication 1, caractérisé en ce que R³ représente un groupement cyano.

4. Procédé selon la revendication 1, caractérisé en ce que R⁴ représente un atome d'oxygène.

5. Procédé selon la revendication 1, caractérisé en ce que X représente un atome d'azote dans la formule I.

6. Procédé selon la revendication 1, caractérisé en ce que R² représente un reste de la série du pyrrole, du thiazole, du thiophène ou de l'indole.

7. Procédé selon la revendication 1, caractérisé en ce que la condensation est effectuée à une température de 20-80°C.
